(19) Europäisches Patentamt
European Patent Office
Office européen des brevets

(11)  **EP 4 232 761 B1**

(12)  **EUROPÄISCHE PATENTSCHRIFT**

(45) Veröffentlichungstag und Bekanntmachung des Hinweises auf die Patenterteilung:
**26.02.2025  Patentblatt 2025/09**

(21) Anmeldenummer: **21772691.8**

(22) Anmeldetag: **27.08.2021**

(51) Internationale Patentklassifikation (IPC):
*F25B 41/20* (2021.01)       *F25B 41/42* (2021.01)
*F25B 6/02* (2006.01)        *F25B 40/00* (2006.01)
*F25B 41/30* (2021.01)       *F25B 5/02* (2006.01)
*B60H 1/32* (2006.01)        *F25B 49/02* (2006.01)
*F25B 45/00* (2006.01)

(52) Gemeinsame Patentklassifikation (CPC):
**F25B 41/20; B60H 1/00921; F25B 5/02; F25B 6/02; F25B 40/00; F25B 41/30; F25B 41/42; F25B 45/00; F25B 49/02;** B60H 2001/00928; B60H 2001/00935; B60H 2001/00949; F25B 2345/002; F25B 2345/006; F25B 2400/0403;                    (Forts.)

(86) Internationale Anmeldenummer:
**PCT/EP2021/073694**

(87) Internationale Veröffentlichungsnummer:
**WO 2022/083924 (28.04.2022 Gazette 2022/17)**

(54) **VERFAHREN ZUR KÄLTEMITTELMAXIMIERUNG IN AKTIVEN SYSTEMABSCHNITTEN EINER KÄLTEANLAGE, KÄLTEANLAGE UND KRAFTFAHRZEUG MIT EINER SOLCHEN KÄLTEANLAGE**

METHOD FOR MAXIMIZING A REFRIGERANT IN ACTIVE SYSTEM SECTIONS OF A REFRIGERATION SYSTEM, REFRIGERATION SYSTEM, AND MOTOR VEHICLE COMPRISING SUCH A REFRIGERATION SYSTEM

PROCÉDÉ POUR MAXIMISER UN FLUIDE FRIGORIGÈNE DANS DES SECTIONS DE SYSTÈME ACTIF D'UN SYSTÈME DE RÉFRIGÉRATION, SYSTÈME DE RÉFRIGÉRATION ET VÉHICULE À MOTEUR COMPRENANT UN TEL SYSTÈME DE RÉFRIGÉRATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **23.10.2020  DE 102020127905**

(43) Veröffentlichungstag der Anmeldung:
**30.08.2023  Patentblatt 2023/35**

(73) Patentinhaber: **AUDI AG**
**85057 Ingolstadt (DE)**

(72) Erfinder:
• **SCHROEDER, Dirk**
  **85077 Manching (DE)**
• **REBINGER, Christian**
  **80807 München (DE)**
• **HALTMEIER, Thomas**
  **85055 Ingolstadt (DE)**
• **ROST, Stephen**
  **85077 Manching (DE)**

(56) Entgegenhaltungen:
**EP-A2- 2 921 326        DE-A1- 102018 213 232**
**DE-A1- 102018 221 280**

(52) Gemeinsame Patentklassifikation (CPC): (Forts.)
F25B 2500/24; F25B 2600/2519; F25B 2700/19

**Beschreibung**

Die Erfindung betrifft ein Verfahren zur Kältemittelmaximierung in aktiven Systemabschnitten einer Kälteanlage für ein Kraftfahrzeug, eine Kälteanlage und ein Kraftfahrzeug mit einer solchen Kälteanlage.

Eine Kälteanlage, die insbesondere auch eine Wärmepumpenfunktion aufweisen kann, umfasst üblicherweise einen Kältemittelverdichter, der mit einem Primärstrang und einem Sekundärstrang verbindbar oder verbunden ist; einen direkt oder indirekt wirkenden äußeren Wärmeübertrager, der im Primärstrang angeordnet ist; einen Verdampfer, der im Primärstrang angeordnet ist; wenigstens einen weiteren als Wärmequelle wirkenden Wärmeübertrager, insbesondere ein Heizregister, der im Sekundärstrang angeordnet ist; ein zwischen dem Kältemittelverdichter und dem äußeren Wärmeübertrager angeordnetes Primärstrangventil; ein zwischen dem Kältemittelverdichter und dem wenigstens einen weiteren Wärmeübertrager, insbesondere Heizregister, angeordnetes Sekundärstrangventil.

Kälteanlagen, bei denen Kältemittel aus einem inaktiven Bereich bzw. Strang in einen aktiven Bereich bzw. Strang strömen kann, sind beispielsweise aus der DE 10 2011 118 162 A1 oder der DE 10 2019 201 427 A1 bekannt. Aus der DE 10 2013 019 498 A1 ist eine Kälteanlage bekannt, bei der für das Kältemittelmanagement Berechnungsmodelle herangezogen werden. Bei den bekannten Kälteanlagen erfolgt das Entziehen von Kältemittel aus einem inaktiven Bereich aufgrund der sich üblicherweise im Betrieb einstellenden Arbeitsdrücke, ohne dass diesem Aspekt eine besondere Bedeutung beigemessen wird.

Ergänzend wird auf die Druckschriften DE 10 2018 213 232 A1, DE 10 2018 221 280 A1 und EP 2 921 326 A2 hingewiesen, aus denen Kälteanlagen gemäß dem Oberbegriff von Anspruch 7 bekannt sind.

Es hat sich gezeigt, dass bei Kälteanlagen, die wie in den erwähnten Dokumenten des Stands der Technik betrieben werden, die aktive Kältemittelmenge zu wenig überwacht werden kann, so dass Fälle eintreten können, bei denen die Kälteanlage bzw. das System unterfüllt (im aktiven Bereich bzw. Strang) betrieben werden kann, was zu Einbußen bei der Leistung der Kälteanlage in den unterschiedlichen Betriebszuständen führen kann.

Die der Erfindung zu Grunde liegende Aufgabe wird darin gesehen, ein Verfahren anzugeben, bei dem das Kältemittelmanagement optimiert ist, insbesondere unter der Berücksichtigung von unterschiedlichen Betriebszuständen der Kälteanlage.

Diese Aufgabe wird gelöst durch ein Verfahren, eine Kälteanlage und ein Kraftfahrzeug mit den Merkmalen der jeweiligen unabhängigen Patentansprüche. Vorteilhafte Ausgestaltungen mit zweckmäßigen Weiterbildungen sind in den abhängigen Patentansprüchen angegeben.

Vorgeschlagen wird also ein Verfahren zum Betreiben einer Kälteanlage für ein Kraftfahrzeug, wobei die Kälteanlage umfasst: einen Kältemittelverdichter, der mit einem Primärstrang und einem Sekundärstrang verbindbar oder verbunden ist; einen direkt oder indirekt wirkenden äußeren Wärmeübertrager, der im Primärstrang angeordnet ist; einen Verdampfer, der im Primärstrang angeordnet ist; wenigstens einen weiteren, eine Wärmequelle darstellenden Wärmeübertrager, insbesondere ein Heizregister, der im Sekundärstrang angeordnet ist; ein zwischen dem Kältemittelverdichter und dem äußeren Wärmeübertrager angeordnetes Primärstrangventil; ein zwischen dem Kältemittelverdichter und dem weiteren, eine Wärmequelle darstellenden Wärmeübertrager, insbesondere Heizregister, angeordnetes Sekundärstrangventil; wenigstens eine Ventileinrichtung, die zwischen einem hochdruckseitigen Abschnitt des Primärstrangs oder des Sekundärstrangs und einem niederdruckseitigen, stromaufwärts von dem Kältemittelverdichter befindlichen Leitungsabschnitt angeordnet ist.

Dabei umfasst das folgende Schritte:
Einstellen eines Betriebsmodus der Kälteanlage mit aktivem Primärstrang und inaktivem Sekundärstrang oder mit aktivem Sekundärstrang und inaktivem Primärstrang; Erfassen des Drucks im inaktiven Strang; Aktivieren einer Absaugung von Kältemittel aus dem inaktiven Strang in den aktiven Strang durch Absenken des Drucks im aktiven Strang auf einen Wert unterhalb des Drucks im inaktiven Strang und durch Öffnen der betreffenden Ventileinrichtung.

Mittels der Erfassung des Drucks im inaktiven Strang bzw. Abschnitt der Kälteanlage kann die Aktivierung einer Absaugung von Kältemittel aus dem inaktiven Strang gezielt umgesetzt werden, wobei ein Absenken des Drucks im aktiven Strang gezielt umgesetzt werden kann. Es wird darauf hingewiesen, dass der hier verwendete Begriff der Erfassung bzw. Erfassen des Drucks eine unmittelbare Druckmessung oder eine mittelbare Abschätzung des Drucks, insbesondere basierend auf anderen Parametern, wie etwa Kältemitteltemperatur, Kältemitteleigenschaften, sonstige Betriebsparameter der Kälteanlage, beispielsweise des Kältemittelverdichters, sein kann. Mit dem Begriff Erfassung/Erfassen ist also das Erhalten eines Druckwerts gemeint, der auf einer konkreten Messung beruhen kann oder der anhand weiterer Kennzahlen hergeleitet bzw. berechnet bzw. abgeschätzt wird.

Bei dem Verfahren kann der Druck im aktiven Strang ausgehend von einem Arbeitsdruckniveau, das höher ist als der Druck im inaktiven Strang, abgesenkt werden. Hierdurch ist es möglich, zumindest kurzzeitig den Druck im aktiven Strang so stark abzusenken, dass Kältemittel aus dem inaktiven Strang entzogen werden kann, um die Kältemittelmenge im aktiven Bereich der Kälteanlage zu maximieren, bevor im Nachgang wieder auf das eigentliche Arbeitsdruckniveau zurückgekehrt wird

Bei dem Verfahren kann der Druck im aktiven Strang ausgehend von einem Arbeitsdruckniveau, das niedriger ist als der Druck im inaktiven Strang, weiter abgesenkt werden. Hierdurch ist es möglich, zumindest kurzzeitig der Druck im aktiven Strang zusätzlich abzusenken, um das Entziehen von Kältemittel aus dem inaktiven Strang bzw. das Maximieren der Kältemittelmenge im aktiven Bereich zu beschleunigen.

Um bei der Aktivierung der Absaugung von Kältemittel aus dem inaktiven Strang den Betrieb der Kälteanlage und deren Leistungsfähigkeit in jedem Fall sicherzustellen, kann der Druck im aktiven Strang auf einem Druckniveau gehalten werden, das einer für die Kälteanlage zulässigen Niederdruckgrenze entspricht.

Bei dem Verfahren kann der im inaktiven Strang erfasste oder abgeschätzte Druckwert verglichen werden mit dem sich bei anliegender Umgebungstemperatur oder anliegender Kühlmittel-/-fluidtemperatur einstellenden Ruhedruck, wobei das Aktivieren des Absaugens von Kältemittel aus dem inaktiven Strang dann erfolgt, wenn der erfasste Druck größer oder gleich dem sich bei Umgebungstemperatur einstellenden Ruhedrucks ist.

Ein Absaugungsbedarf kann insbesondere über im inaktiven Strang bzw. Totvolumen montierte Drucksensoren ermittelt bzw. erkannt oder prognostiziert werden. Ist der in diesen inaktiven Strängen bzw. Segmenten erfasste Druckwert (dauerhaft) unterhalb des sich bei Umgebungstemperatur oder Kühlmittel-/-fluidtemperatur einstellenden Ruhedrucks, so ist dieser Strang bereits abgesaugt und nur noch Kältemittel in Gasphase vorliegend. Ist der in diesen inaktiven Strängen bzw. Segmenten erfasste Druckwert auf oder über dem Niveau des sich bei der jeweils erfassten bzw. gemessenen Umgebungstemperatur oder Kühlmittel-/-fluidtemperatur einstellenden Ruhedrucks, so ist dieser Strang bzw. Sektor noch nicht abgesaugt und Kältemittel liegt als 2-phasiges Gemisch oder u.U. auch flüssig vor. Der Zusammenhang zwischen (Umgebungs-/ Fluid-) Temperatur und Kältemitteldruck kann beispielsweise über eine Stoffdatentabelle für ein eingesetztes Kältemittel abgeleitet werden.

Bei dem Verfahren kann das Aktivieren des Absaugens von Kältemittel aus dem inaktiven Strang beim Starten der Kälteanlage oder beim Wiederanlauf der Kälteanlage erfolgen, um die Kältemittelmenge im aktiven Strang zu maximieren. Hierdurch ist es möglich, die Kälteanlage in einem bestimmten Betriebsmodus sehr rasch auf eine optimale Leistung zu bringen und die Kältemittelmenge im aktiven Strang bereits zu Beginn des Betriebs positiv zu beeinflussen.

Vorgeschlagen wird auch eine Kälteanlage, insbesondere mit Wärmepumpenfunktion, für ein Kraftfahrzeug, wobei die Kälteanlage umfasst: einen Kältemittelverdichter, der mit einem Primärstrang und einem Sekundärstrang verbindbar oder verbunden ist; einen direkt oder indirekt wirkenden äußeren Wärmeübertrager, der im Primärstrang angeordnet ist; einen Verdampfer, der im Primärstrang angeordnet ist; wenigstens einen weiteren, eine Wärmequelle darstellenden Wärmeübertrager, insbesondere ein Heizregister, der im Sekundärstrang angeordnet ist; ein zwischen dem Kältemittelverdichter und dem äußeren Wärmeübertrager angeordnetes Primärstrangventil; ein zwischen dem Kältemittelverdichter und dem weiteren, eine Wärmequelle darstellenden Wärmeübertrager, insbesondere Heizregister, angeordnetes Sekundärstrangventil; wenigstens eine Ventileinrichtung, die zwischen einem hochdruckseitigen Abschnitt des Primärstrangs oder des Sekundärstrangs und einem niederdruckseitigen, stromaufwärts von dem Kältemittelverdichter befindlichen Leitungsabschnitt angeordnet ist; und wenigstens einen Drucksensor oder Druck-/Temperatursensor, der in dem betreffenden hochdruckseitigen Abschnitt des Primärstrangs oder des Sekundärstrangs angeordnet ist und der dazu eingerichtet ist, bei einem Betriebszustand mit aktivem Primärstrang und inaktivem Sekundärstrang oder mit aktivem Sekundärstrang und inaktivem Primärstrang den Druck im inaktiven Strang zu erfassen.

Die Kälteanlage umfasst gemäß Erfindung eine Steuereinrichtung, die dazu eingerichtet ist, das oben beschriebene Verfahren durchzuführen.

Ein Kraftfahrzeug, insbesondere ein zumindest teilweise elektrisch betriebenes Kraftfahrzeug, kann eine oben beschriebene Kälteanlage aufweisen. Bei einem Elektrofahrzeug kann der effiziente Betrieb der Kälteanlage zu Stromeinsparungen führen, so dass hierdurch eine größere Reichweite des Elektrofahrzeugs erzielt werden kann.

Es wird allgemein darauf hingewiesen, dass das oben beschriebene Verfahren für jede Art von Kälteanlage eingesetzt werden kann, die ein System aufweist, das über segmentierbare Abschnitte verfügt. Das Verfahren kann also sowohl für eine reine Kälteanlage als auch für ein System mit einer Wärmepumpen- und/oder Reheat-Funktion genutzt werden, so dass damit verbundene Vorteile in positiver Weise im Wesentlichen gezielt ausgeschöpft werden können. Als einfachste Variante kann beispielsweise eine Kälteanlage gesehen werden, die einen zweiten Verdampferstrang in Form eines Chillers oder Luft beaufschlagten Verdampfers aufweist, wobei der zusätzliche bzw. zweite Strang in sich segmentierbar darstellbar ist.

Weitere Vorteile und Einzelheiten der Erfindung ergeben sich aus der nachfolgenden Beschreibung von Ausführungsformen unter Bezugnahme auf die Figuren. Dabei zeigt:

Fig. 1 ein schematisches und vereinfachtes Schaltbild einer Kälteanlage für ein Kraftfahrzeug,

Fig. 2 ein Flussdiagramm einer beispielhaften Umsetzung des Verfahrens insbesondere mittels der in Fig. 1 beschriebenen Kälteanlage.

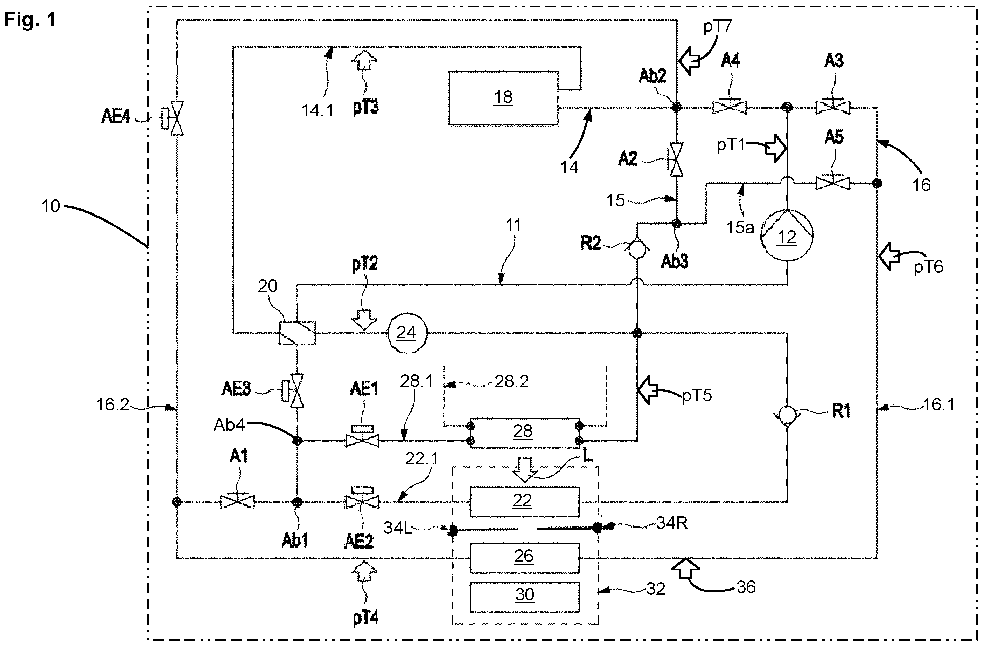

In Fig. 1 ist eine Ausführungsform einer Kälteanlage 10 für ein Kraftfahrzeug schematisch und vereinfacht dargestellt. Die Kälteanlage 10 umfasst einen Kältemittelkreislauf 11, der sowohl in einem Kälteanlagenbetrieb (kurz auch AC-Betrieb genannt), als auch in einem Wärmepumpenmodus betrieben werden kann. Die Kälteanlage 10 umfasst in der gezeigten Ausführungsform einen Kältemittelverdichter 12, einen äußeren Wärmeübertrager 18, einen inneren Wärmeübertrager 20, einen Verdampfer 22 und einen Akkumulator bzw. Kältemittelsammler 24. Der äußere Wärmeübertrager 18 kann als Kondensator oder Gaskühler ausgebildet sein. Insbesondere ist der äußere Wärmeübertrager 18 in der dargestellten Ausführungsform bidirektional durchströmbar.

Der Verdampfer 22 ist hier beispielhaft als Frontverdampfer für ein Fahrzeug gezeigt. Der Verdampfer 22 steht stellvertretend auch für weitere in einem Fahrzeug mögliche Verdampfer, wie beispielsweise Fondverdampfer, die strömungstechnisch parallel zueinander angeordnet sein können. Mit anderen Worten umfasst die Kälteanlage 10 also wenigstens einen Verdampfer 22.

Stromabwärts des Verdichters 12 ist ein Absperrventil A4 angeordnet. Stromaufwärts des Verdampfers 22 ist ein Expansionsventil AE2 vorgesehen.

Im Rahmen dieser Beschreibung wird in dem gesamten Kältemittelkreislauf 11 der Kälteanlage 10 der Abschnitt vom Verdichter 12 zum äußeren Wärmeübertrager 18, zum inneren Wärmeübertrager 20 und zum Verdampfer 22 als Primärstrang 14 bezeichnet.

Die Kälteanlage 10 umfasst weiter ein Heizregister 26 (auch als Heizkondensator oder Heizgaskühler bezeichnet). Stromaufwärts des Heizregisters 26 ist ein Absperrventil A3 angeordnet. Stromabwärts des Heizregisters 26 ist ein Absperrventil A1 angeordnet. Ferner ist stromabwärts des Heizregisters 26 ein Expansionsventil AE4 angeordnet.

Im Rahmen dieser Beschreibung wird in dem gesamten Kältemittelkreislauf der Kälteanlage 10 der Abschnitt vom Verdichter 12 zum Heizregister 26, zum Expansionsventil AE4 und zu einem Abzweig Ab2 als Sekundärstrang 16 bezeichnet. Der Sekundärstrang 16 umfasst einen Heizzweig 16.1, der sich von dem Absperrventil A3 über das Heizregister 26 zum Absperrventil A1 erstreckt. Weiter umfasst der Sekundärstrang 16 einen Nachheizzweig bzw. Reheat-Zweig 16.2, der stromaufwärts mit dem Heizregister 26 und stromabwärts mit dem äußeren Wärmeübertrager 18 fluidverbindbar ist. Dabei mündet der Sekundärstrang 16 bzw. der Reheat-Zweig 16.2 bei einem Abzweigpunkt Ab2 in den Primärstrang 14.

Die Kälteanlage 10 umfasst einen weiteren Verdampfer bzw. Chiller 28. Der Chiller 28 ist strömungstechnisch parallel zum Verdampfer 22 vorgesehen. Der Chiller 28 kann beispielsweise zur Kühlung einer elektrischen Komponente des Fahrzeugs dienen, aber auch zur Realisierung einer Wasser-Wärmepumpenfunktion unter Nutzung der Abwärme von wenigstens einer elektrischen Komponente. Dem Chiller 28 ist stromaufwärts ein Expansionsventil AE1 vorgeschaltet.

Die Kälteanlage 10 kann auch ein elektrisches Heizelement 30 aufweisen, das beispielsweise als Hochvolt-PTC-Heizelement ausgeführt ist. Das elektrische Heizelement 30 dient als Zusatzheizer für einen in den Fahrzeuginnenraum geführten Zuluftstrom L. Dabei kann das elektrische Heizelement 30 zusammen mit dem Heizregister 26 und dem Verdampfer 22 in einem Klimagerät 32 untergebracht sein. Dabei kann das elektrische Heizelement 30 dem Heizregister 26 nachgeschaltet angeordnet sein.

In der Fig. 1 sind ferner noch Rückschlagventile R1 und R2 ersichtlich. Ferner sind auch einige Sensoren pT1 bis pT5 zur Erfassung von Druck oder/und Temperatur des Kältemittels dargestellt. Es wird darauf hingewiesen, dass die Anzahl der Sensoren bzw. deren Anordnung hier nur beispielhaft gezeigt ist. Eine Kälteanlage 10 kann auch weniger oder mehr Sensoren aufweisen. Im gezeigten Beispiel sind als Sensoren kombinierte Druck-/Temperatursensoren pT1 bis pT5 gezeigt. Es ist aber genauso denkbar, dass voneinander getrennte Sensoren für die Messung von Druck bzw. Temperatur eingesetzt werden und ggf. auch räumlich voneinander getrennt entlang den Kältemittelleitungen angeordnet sind.

Die Kälteanlage 10 kann in unterschiedlichen Modi betrieben werden, die nachfolgend kurz beschrieben werden.

Im AC-Betrieb des Kältemittelkreislaufs 11 strömt das auf Hochdruck verdichtete Kältemittel ausgehend von dem Kältemittelverdichter 12 bei offenem Absperrventil A4 in den äußeren Wärmeübertrager 18. Von dort strömt es zu dem Hochdruckabschnitt des inneren Wärmeübertragers 20 und dem vollständig geöffneten Expansionsventil AE3. Über einen Abzweigpunkt Ab1 kann das Kältemittel zum Expansionsventil AE2 und in den Innenraum-Verdampfer 22 strömen (Verdampferabschnitt 22.1). Parallel oder alternativ kann das Kältemittel über einen Abzweigpunkt Ab4 und das Expansionsventil AE1 in den Chiller 28 strömen (Chillerabschnitt 28.1). Aus dem Verdampfer 22 oder/und dem Chiller 28 strömt das Kältemittel niederdruckseitig in den Sammler 24 und durch den Niederdruckabschnitt des inneren Wärmeübertragers 20 zurück zum Verdichter 12.

In dem AC-Betrieb ist der Heizzweig 16.1 bzw. der Sekundärstrang 16 mittels des Absperrventils A3 abgesperrt, so dass heißes Kältemittel nicht durch das Heizregister 26 strömen kann. Zur Rückholung von Kältemittel aus dem inaktiven Heizzweig 16.1 kann das als Absperrventil ausgebildete Absperrorgan A5 geöffnet werden, so dass das Kältemittel über das Absperrorgan A5 und das Rückschlagventil R2, bei gleichzeitig geschlossenem Absperrorgan A2, in Richtung des Sammlers 24 strömen kann.

Im Heizbetrieb des Kältemittelkreislaufs 11 wird das Absperrventil A4 geschlossen und das Absperrventil A3 geöffnet, so dass heißes Kältemittel in den Heizzweig 16.1 strömen kann.

Zur Durchführung der Heizfunktion mittels des Chillers 28 zur Realisierung eines Wasser-Wärmepumpenbetriebs strömt das mittels des Kältemittelverdichters 12 verdichtete Kältemittel über das geöffnete Absperrventil A3 in das Heizregister 26. Am Heizregister 26 wird Wärme an einen in den Fahrzeuginnenraum geführten Zuluftstrom L abgegeben. Das Kältemittel strömt anschließend über das geöffnete Absperrventil A1 und den Abzweigpunkt Ab1. Es wird mittels des Expansionsventils AE1 in den Chiller 28 zur Aufnahme von Abwärme der in einem Kühlmittelkreislauf 28.2 angeordneten elektrischen und/oder elektronischen Komponenten entspannt. Bei dieser Heizfunktion sind die Expansionsventile AE3 und AE4 geschlossen, das Absperrventil A5 geschlossen und das Absperrventil A2 geöffnet. Dabei kann über das Absperrventil A2 im Wasser-Wärmepumpenbetrieb ausgelagertes Kältemittel aus einem Bidirektionalzweig 14.1 bzw. dem Primärstrang 14 abgesaugt und über das Rückschlagventil R2 dem Sammler 24 zugeführt werden.

Zur Durchführung der Heizfunktion mittels des äußeren Wärmeübertragers 18 als Wärmepumpenverdampfer strömt das mittels des Kältemittelverdichters 12 verdichtete Kältemittel über das geöffnete Absperrventil A3 zur Abgabe von Wärme an einen Zuluftstrom L in das Heizregister 26. Anschließend wird es über das geöffnete Absperrventil A1 mittels des Expansionsventils AE3 in den äußeren Wärmeübertrager 18 zur Aufnahme von Wärme aus der Umgebungsluft entspannt. Danach strömt das Kältemittel über einen Wärmepumpenrückführzweig 15 zum Sammler 24 und zurück zum Kältemittelverdichter 12. Die Expansionsventile AE1, AE2 und AE4 bleiben dabei, ebenso wie das Absperrventil A5, geschlossen.

Eine indirekte Dreiecksschaltung kann dadurch realisiert werden, dass bei geöffnetem Absperrventil A1 das von dem Kältemittelverdichter 12 verdichtete Kältemittel mittels des Expansionsventils AE1 in den Chiller 28 entspannt wird, wobei gleichzeitig kühlmittelseitig, also in dem Kühlmittelkreislauf 28.2 kein Massenstrom erzeugt wird, also bspw. das als Kühlmittel verwendete Fluid, wie etwa Wasser oder Wasser-Glykol-Gemisch, auf der Kühlmittelseite des Chillers 28 stehen bleibt bzw. der Chiller 28 nicht aktiv von Kühlmittel durchströmt wird. Die Expansionsventile AE2, AE3 und AE4 bleiben bei dieser Schaltvariante geschlossen.

Bei einem Nachheiz- bzw.- Reheat-Betrieb wird der in den Fahrzeuginnenraum zugeführte Zuluftstrom L mittels des Verdampfers 22 zunächst gekühlt und damit entfeuchtet. Mit der auf das Kältemittel durch Verdampfung und Entfeuchtung übertragenen Wärme sowie der dem Kältemittel über den Verdichter 12 zugeführten Wärme kann der Zuluftstrom L mittels des Heizregisters 26 vollständig oder zumindest teilweise wieder erwärmt werden.

Hierzu weist die Kälteanlage 10, insbesondere das Klimagerät 32, zwischen dem Verdampfer 22 und dem Heizregister 26 einstellbare, insbesondere steuerbare und schwenkbare, Temperaturklappen 34 auf. Im dargestellten Beispiel sind eine linke und eine rechte Temperaturklappe 34L und 34R (in Figur 1 schematisch dargestellt) angeordnet. Die Temperaturklappen 34L, 34R können zwischen einer Offenposition, die als 100%-Position bezeichnet wird, und einer Schließposition, die als 0%-Position bezeichnet wird, eingestellt bzw. verschwenkt werden. Alternativ ist es auch möglich, die Temperaturklappen 34R, 34L dem Heizregister 26 nachzuschalten.

In der 100%-Position wird der gesamte den Verdampfer 22 durchströmende Zuluftstrom L über das Heizregister 26 geführt und erwärmt, bevor dieser in den Fahrgastraum des Fahrzeugs strömen kann. In der 0%-Position strömt der gesamte den Verdampfer 22 durchströmende Zuluftstrom L im Bypass um das Heizregister 26 ohne Erwärmung und damit ohne Wärmeaufnahme in den Fahrgastraum.

In einer x-Position der Temperaturklappen 34L und 34R mit 0 % < x < 100 % sind diese Temperaturklappen nur teilweise geöffnet, so dass jeweils nur ein Teilluftstrom des den Verdampfer 22 durchströmenden Zuluftstroms L über das Heizregister 26 geführt wird. Dieser erwärmte Teilluftstrom kann anschließend dem verbleibenden, gekühlten und entfeuchteten Teilluftstrom beigemischt werden. Der in dieser Weise erwärmte Zuluftstrom L wird dem Fahrgastraum des Fahrzeugs zugeführt. Beispielhaft zeigt eine 50 %-Position an, dass die Temperaturklappen 34R und 34L nur halb, also 50 % geöffnet sind.

Die Kälteanlage 10 weist im Sekundärstrang 16 stromabwärts von dem Sekundärstrangventil A3 und stromaufwärts von dem Heizregister 26 eine Sensoreinrichtung 36 auf, die dazu eingerichtet ist, einen die Temperatur des gasförmigen Kältemittels repräsentierenden Heißgastemperaturwert stromaufwärts von dem Heizregister 26 zu erfassen. Der Heißgastemperaturwert kann dabei direkt gemessen bzw. detektiert werden oder auch indirekt anhand anderer Systemparameter abgeschätzt werden. Beispielsweise ist es denkbar, mittels der Sensoreinrichtung 36 einen Druck im Sekundärstrang 16 zu bestimmen und hieraus Rückschlüsse auf den Heißgastemperaturwert zu ziehen. Die Sensoreinrichtung 36 kann beispielsweise ein reiner Temperatursensor oder ein kombinierter Temperatur-/Drucksensor sein.

Das hier vorgeschlagene Verfahren kann im Prinzip bei jedem der oben beschriebenen Betriebsmodi, wie beispielsweise AC-Betrieb, Heizbetrieb jeweils mit/ohne Einbindung von Wärmepumpenfunktion eingesetzt werden, wobei davon ausgegangen wird, dass entweder der Primärstrang 14 oder der Sekundärstrang 16 nicht aktiv von Kältemittel durchströmt werden, also inaktiv sind bei geschlossenem Primärstrangventil A4 bzw. geschlossenem Sekundärstrangventil A3.

Aus der Fig. 1 ist ersichtlich, dass in dem Leitungsabschnitt 15 das Absperrventil A2 vorgesehen ist. Das Absperrventil A2 ist dabei hochdruckseitig im Primärstrang 14 angeordnet, wobei der Leitungsabschnitt 15 den Primärstrang 14 mit der Niederdruckseite des Kältemittelkreislaufs 11 stromaufwärts von dem Kältemittelverdichter 12 verbindet.

Ferner ist in dem Leitungsabschnitt 15a das Absperrventil A5 vorgesehen. Das Absperrventil A5 ist dabei hochdruckseitig im Sekundärstrang 16 angeordnet, wobei der Leitungsabschnitt 15a der Sekundärstrang 16 mit der Niederdruckseite des Kältemittelkreislaufs 11 stromaufwärts von dem Kältemittelverdichter 12 verbindet.

Um den Druck in einem jeweils inaktiven Strang 14, 16 bzw. Bereich des Kältemittelkreislaufs 11 bestimmen zu können, sind dem Primärstrang 14 und dem Sekundärstrang 16 jeweilige Sensoreinrichtungen pT6 bzw. pT7 zugeordnet. Dabei können die Sensoreinrichtungen pT6, pT7 Drucksensoren oder Druck-/Temperatursensoren sein. Die jeweiligen Drucksensoren pT6, pT7 sind jeweils stromabwärts von dem Primärstrangventil A4 bzw. dem Sekundärstrangventil A3 angeordnet. Sie liegen also bezogen auf eine übliche Strömungsrichtung von Kältemittel hinter dem jeweiligen Absperrorgan A3, A4, das für die Aktivierung bzw. Inaktivierung des betreffenden Strangs 14, 16 eingesetzt wird.

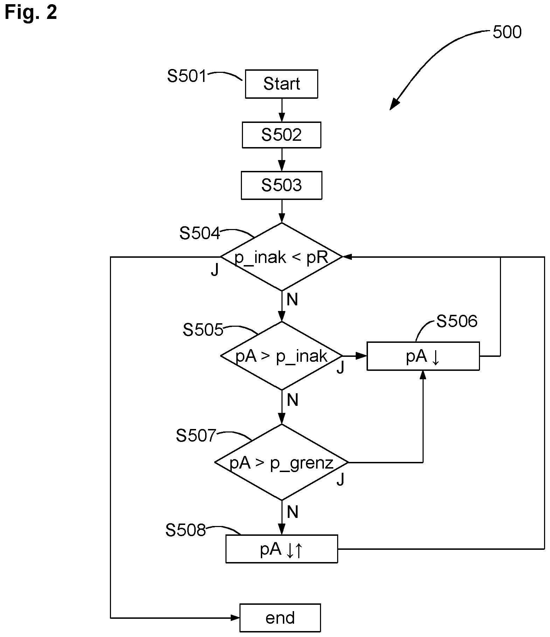

Das Verfahren 500, das zur gezielten Absaugung von Kältemittel aus inaktiven Bereichen der Kälteanlage 10 durchgeführt werden kann, wird nachfolgend unter Bezugnahme auf die Fig. 2 genauer beschrieben.

Gemäß dem in Fig. 2 gezeigten Verfahren 500 erfolgt im Betrieb nach dem Start (S501) der Kälteanlage 10 das Verschalten in einen gewünschten bzw. passenden Betrieb, was durch den Schritt S502 illustriert ist. Gemäß einem Schritt S503 wird in einem inaktiven Strang bzw. Bereich der Kälteanlage 10 der Druck p_inak erfasst. In Schritt S504 wird überprüft, ob der erfasste Druckwert p_inak kleiner als der sich bei Umgebungstemperatur einstellende Ruhedruck pR ist. Wenn der Druck p_inak in dem betreffenden Strang 14, 16 kleiner als der Ruhedruck pR, wird das Verfahren beendet, da keine weitere Absaugung aus dem inaktiven Strang 14, 16 mehr nötig bzw. möglich ist. Wenn der erfasste Druck p_inak größer oder gleich dem Ruhedruck pR ist, wird gemäß Schritt S505 überprüft, ob der Arbeitsdruck pA auf der Niederdruckseite des Kältemittelkreislaufs 11 größer ist als der im inaktiven Strang 14, 16 erfasste Druck p_inak.

Wenn der Arbeitsdruck pA größer ist als der Druck p_inak erfolgt gemäß Schritt S506 ein aktives Absenken des Arbeitsdrucks pA auf einen Wert, der niedriger ist als der Druck p_inak. Hierzu können die aktiv durchströmten Komponenten des betreffenden Strangs 14, 16, insbesondere zugeordnete Ventileinrichtungen, wie etwa Expansionsventile AE1, AE2, AE3, aber auch der Verdichter 12 aktiv so angesteuert werden, dass sich temporär ein niedrigerer Arbeitsdruck pA einstellt. Wenn der Arbeitsdruck pA niedriger ist als der Druck p_inak erfolgt gemäß Schritt S507 eine Überprüfung, ob der Arbeitsdruck pA größer als eine Niederdruckgrenze p_grenz ist. Wenn der Arbeitsdruck pA größer ist als die Niederdruckgrenze p_grenz wird der Arbeitsdruck pA aktiv weiter abgesenkt (S506) bzw. kann weiter abgesenkt werden (S506). Falls der Arbeitsdruck pA die Niederdruckgrenze p_grenz erreicht, erfolgt keine weitere aktive Absenkung des Arbeitsdrucks pA und der Arbeitsdruck wird auf einen passenden Wert geregelt (S508) bzw. an der Niederdruckgrenze p_grenz gehalten, was durch die beiden nach bzw. unten weisenden Pfeile illustriert ist. Auch wenn dies im Verfahrensablauf nicht explizit dargestellt ist, umfasst das Verfahren 500 an passender Stelle natürlich auch das Öffnen einer betreffenden Ventileinrichtung, insbesondere des Absperrventils A2 oder A5, um die absaugende Verbindung zwischen Niederdruckseite und inaktivem Strang 14 bzw. 16 herstellen zu können.

Die Kombination der Bedingung in S505 und von Schritt S506, also eine gezielte Absenkung des Arbeitsdrucks pA, wenn dieser im üblichen Betrieb an sich höher als der Druck p_inak im inaktiven Strang wäre, kann als erster Modus des aktiven Absaugens von Kältemittel bezeichnet bzw. verstanden werden. Der erste Modus führt also zu einer erzwungenen Absaugung, weil im üblichen Betrieb der Kälteanlage nicht sichergestellt ist, dass die Absaugung sich aufgrund der herrschenden Druckverhältnisse von selbst einstellen würde.

Die Kombination der Bedingung in S507 und von Schritt S506, also eine weitere Absenkung des Arbeitsdrucks pA, auch wenn dieser bereits unterhalb des Drucks p_inak im inaktiven Strang liegt, kann als zweiter Modus des aktiven Absaugens von Kältemittel bezeichnet bzw. verstanden werden. Der zweite Modus führt zu einer beschleunigten Absaugung von Kältemittel.

Anhand einiger Beispiele von verschiedenen Betriebsmodi der Kälteanlage 10 wird nachfolgend noch der Einsatz des Verfahrens exemplarisch erläutert.

In einem reinen AC-Betrieb (Kühlung des Innenraums) strömt das Kältemittel aktiv im Primärstrang 14 vom Kältemittelverdichter 12 über das geöffnete Primärstrangventil A4, den äußeren Wärmeübertrager 18 und den Verdampfer 22, bei geschlossenem Sekundärstrangventil A3 und geschlossenen Ventilen A1, AE1 und AE4. Niederdruckseitig, also stromabwärts von dem Verdampfer 22 stellt sich dann ein Arbeitsdruck pA ein, der üblicherweise kleiner ist als der im inaktiven Strang 16 mittels des Sensors pT6 erfasste Druck p_inak. Entsprechend kommt bei einem solchen reinen AC-Betrieb in der Regel der zweite Modus des aktiven Absaugens in Betracht, wobei der bereits niedrigere Arbeitsdruck pA zusätzlich abgesenkt wird, um mehr Kältemittel aus dem inaktiven Strang 16 über das geöffnete Absperrventil A5 abzusaugen.

In einem Heizbetrieb mit Wasserwärmepumpenfunktion strömt das Kältemittel aktiv im Sekundärstrang 16 vom Kältemittelverdichter 12 über das geöffnete Sekundärstrangventil A3, den als Wärmequelle wirkenden Wärmeübertrager 26 (Heizregister) und den Chiller 28 (Wasserwärmepumpe), bei geschlossenem Primärstrangventil A4 und geschlossenen Ventilen AE2, AE3 und AE4. Niederdruckseitig, also stromabwärts von dem Chiller 28 stellt sich dann ein Arbeitsdruck pA ein, der nicht zwingend kleiner ist als der im inaktiven Strang 14 mittels des Sensors pT7 erfasste Druck p_inak. Entsprechend kommt bei einem solchen Heizbetrieb mir Wasserwärmepumpenfunktion in der Regel der erste Modus des aktiven Absaugens in Betracht, wobei der Arbeitsdruck pA aktiv abgesenkt wird, um Kältemittel aus dem inaktiven Strang 14 über das geöffnete Absperrventil A2 abzusaugen.

Eine aktive Absaugung von Kältemittel aus einem inaktiven Strang bzw. Bereich bzw. Abschnitt der Kälteanlage 10 ist auch in weiteren Betriebszuständen der Kälteanlage 10 möglich, beispielsweise auch im sogenannten Nachheiz- bzw. Reheatbetrieb.

Prinzipiell erfolgt bei dem hier vorgestellten Verfahren 500 also ein aktives und zumindest temporäres Einstellen des Niederdruckniveaus (Arbeitsdruck pA), das unterhalb der Drucklage (Druck p_inak) in dem inaktiven Strang bzw. Bereich liegt bzw. zu liegen kommt.

Grundsätzlich ist festzuhalten, dass ein Absaugen von Kältemittel und damit eine Überführung dessen von einem inaktiven Strang bzw. Systemabschnitt zu einem aktiven nur dann erfolgen kann, wenn das Druckniveau auf der aktiven Systemseite unterhalb der Drucklage der inaktiven Systemseite zu liegen kommt und damit gilt als Absaugvoraussetzung:

$$p\_ab < p\_inak$$

Wie bereits einleitend erwähnt, wird nochmals darauf hingewiesen, dass das oben beschriebene Verfahren 500 für jede Art von Kälteanlage eingesetzt werden kann, die ein System aufweist, das über segmentierbare Abschnitte verfügt. Das Verfahren kann also sowohl für eine reine Kälteanlage als auch für ein hier beispielhaft beschriebenes System 10 mit einer Wärmepumpen- und/oder Reheat-Funktion genutzt werden, so dass damit verbundene Vorteile in positiver Weise im Wesentlichen gezielt ausgeschöpft werden können. Als einfachste Variante kann beispielsweise eine Kälteanlage gesehen werden, die einen zweiten Verdampferstrang in Form eines Chillers oder Luft beaufschlagten Verdampfers aufweist, wobei der zusätzliche bzw. zweite Strang in sich segmentierbar darstellbar ist.

**Patentansprüche**

1. Verfahren (500) zum Betreiben einer Kälteanlage (10) für ein Kraftfahr-zeug, wobei die Kälteanlage (10) umfasst: einen Primärstrang (14) und einen Sekundärstrang (16);

   einen Kältemittelverdichter (12), der mit dem Primärstrang (14) und dem Sekundärstrang (16) verbindbar oder verbunden ist;
   einen direkt oder indirekt wirkenden äußeren Wärmeübertrager (18), der im Primärstrang (14) angeordnet ist;
   einen Verdampfer (22), der im Primärstrang (14) angeordnet ist;
   wenigstens einen weiteren, eine Wärmequelle darstellenden Wärmeübertrager, insbesondere ein Heizregister (26), der im Sekundärstrang (16) angeordnet ist;
   ein zwischen dem Kältemittelverdichter (12) und dem äußeren Wärmeübertrager (18) angeordnetes Primärstrangventil (A4);
   ein zwischen dem Kältemittelverdichter (12) und dem weiteren, eine Wärmequelle darstellenden Wärmeübertrager, insbesondere Heizregister (26), angeordnetes Sekundärstrangventil (A3);
   wenigstens eine Ventileinrichtung (A2, A5), die zwischen einem hochdruckseitigen Abschnitt (15, 15a) des Primärstrangs (14) oder des Sekundärstrangs (16) und einem niederdruckseitigen, stromaufwärts von dem Kältemittelverdichter (12) befindlichen Leitungsabschnitt angeordnet ist,
   **dadurch gekennzeichnet, dass** das Verfahren (500) folgende Schritte umfasst:

   Einstellen (S502) eines Betriebsmodus der Kälteanlage mit aktivem Primärstrang (14) und inaktivem Sekundärstrang (16) oder mit aktivem Sekundärstrang (16) und inaktivem Primärstrang (14);
   Erfassen (S503) des Drucks (p_inak) im inaktiven Strang (14, 16);
   Aktivieren einer Absaugung von Kältemittel aus dem inaktiven Strang (14, 16) in den aktiven Strang (14, 16) durch Absenken (S506) des Drucks (pA) im aktiven Strang (14, 16) auf einen Wert unterhalb des Drucks (p_inak) im inaktiven Strang (14, 16) und durch Öffnen der betreffenden Ventileinrichtung (A2, A5).

2. Verfahren (500) nach Anspruch 1, wobei der Druck (pA) im aktiven Strang (14, 16) ausgehend von einem Arbeitsdruckniveau, das höher ist als der Druck im inaktiven Strang (14, 16), abgesenkt wird (S505).

3. Verfahren (500) nach Anspruch 1, wobei der Druck (pA) im aktiven Strang (14, 16) ausgehend von einem Arbeitsdruckniveau, das niedriger ist als der Druck (p_inak) im inaktiven Strang (14, 16), weiter abgesenkt wird (S507).

4. Verfahren (500) nach Anspruch 2 oder 3, wobei der Druck (pA) im aktiven Strang (14, 16) auf einem Druckniveau gehalten wird (S509), das einer für die Kälteanlage zulässigen Niederdruckgrenze (p_grenz) entspricht.

**5.** Verfahren (500) nach einem der vorhergehenden Ansprüche, wobei der im inaktiven Strang (14, 16) erfasste Druckwert (p_inak) verglichen wird mit dem sich bei anliegender Umgebungstemperatur oder anliegender Kühlmittel-/-fluidtemperatur einstellenden Ruhedruck (pR) und wobei das Aktivieren des Absaugens von Kältemittel aus dem inaktiven Strang (14, 16) dann erfolgt, wenn der erfasste Druck (p_inak) größer oder gleich dem sich bei Umgebungstemperatur einstellenden Ruhedruck (pR) ist (S504).

**6.** Verfahren (500) nach einem der vorhergehenden Ansprüche, wobei das Aktivieren des Absaugens von Kältemittel aus dem inaktiven Strang (14, 16) beim Starten der Kälteanlage oder beim Wiederanlauf der Kälteanlage erfolgt, um die Kältemittelmenge im aktiven Strang (14, 16) zu maximieren.

**7.** Kälteanlage (10) mit Wärmepumpenfunktion für ein Kraftfahrzeug, wobei die Kälteanlage (10) umfasst: einen Primärstrang (14) und einen Sekundärstrang (16);

einen Kältemittelverdichter (12), der mit dem Primärstrang (14) und dem Sekundärstrang (16) verbindbar oder verbunden ist;
einen direkt oder indirekt wirkenden äußeren Wärmeübertrager (18), der im Primärstrang (14) angeordnet ist;
einen Verdampfer (22), der im Primärstrang (14) angeordnet ist;
wenigstens einen weiteren, eine Wärmequelle darstellenden Wärmeübertrager, insbesondere ein Heizregister (26), der im Sekundärstrang (16) angeordnet ist;
ein zwischen dem Kältemittelverdichter (12) und dem äußeren Wärmeübertrager (18) angeordnetes Primärstrangventil (A4);
ein zwischen dem Kältemittelverdichter (12) und dem weiteren, eine Wärmequelle darstellenden Wärmeübertrager, insbesondere Heizregister (26), angeordnetes Sekundärstrangventil (A3);
wenigstens eine Ventileinrichtung (A2, A5), die zwischen einem hochdruckseitigen Abschnitt (15, 15a) des Primärstrangs (14) oder des Sekundärstrangs (16) und einem niederdruckseitigen Leitungsabschnitt stromaufwärts von dem Kältemittelverdichter (12) angeordnet ist,
wenigstens einen Drucksensor (pT6, pt7) oder Druck-/Temperatursensor, der in dem betreffenden hochdruckseitigen Abschnitt (15, 15a) des Primärstrangs (14) oder des Sekundärstrangs (16) angeordnet ist, **dadurch gekennzeichnet, dass** der Drucksensor (pT6, pt7) oder Druck-/Temperatursensor dazu eingerichtet ist, bei einem Betriebszustand mit aktivem Primärstrang (14) und inaktivem Sekundärstrang (16) oder mit aktivem Sekundärstrang (16) und inaktivem Primärstrang (14) den Druck (p_inak) im inaktiven Strang (14, 16) zu erfassen, und dass die Kälteanlage (10) eine Steuereinrichtung umfasst, die dazu eingerichtet ist, das Verfahren gemäß einem der vorhergehenden Ansprüche durchzuführen..

**8.** Kraftfahrzeug, insbesondere zumindest teilweise elektrisch betriebenes Kraftfahrzeug, mit einer Kälteanlage (10) gemäß Anspruch 7.

**Claims**

**1.** Method (500) for operating a refrigeration system (10) for a motor vehicle, wherein the refrigeration system (10) comprises: a primary line (14) and a secondary line (16);

a refrigerant compressor (12) which can be connected or is connected to the primary line (14) and the secondary line (16);
a directly or indirectly acting external heat exchanger (18) which is arranged in the primary line (14);
an evaporator (22) which is arranged in the primary line (14);
at least one further heat exchanger constituting a heat source, in particular a heating register (26), which is arranged in the secondary line (16);
a primary line valve (A4) which is arranged between the refrigerant compressor (12) and the external heat exchanger (18);
a secondary line valve (A3) which is arranged between the refrigerant compressor (12) and the further heat exchanger, in particular the heating register (26), which constitutes a heat source;
at least one valve apparatus (A2, A5) which is arranged between a high-pressure-side section (15, 15a) of the primary line (14) or the secondary line (16) and a low-pressure-side line section which is located upstream of the refrigerant compressor (12),
**characterized in that** the method (500) comprises the following steps:

setting (S502) an operating mode of the refrigeration system with an active primary line (14) and an inactive secondary line (16) or with an active secondary line (16) and an inactive primary line (14);
detecting (S503) the pressure (p_inak) in the inactive line (14, 16);
activating an extraction of refrigerant from the inactive line (14, 16) and into the active line (14, 16) by lowering (S506) the pressure (pA) in the active line (14, 16) to a value below the pressure (p_inak) in the inactive line (14, 16) and by opening the valve apparatus (A2, A5) in question.

2. Method (500) according to claim 1, wherein the pressure (pA) in the active line (14, 16) is lowered (S505) starting from a working pressure level which is higher than the pressure in the inactive line (14, 16).

3. Method (500) according to claim 1, wherein the pressure (pA) in the active line (14, 16) is lowered further (S507) starting from a working pressure level which is lower than the pressure (p_inak) in the inactive line (14, 16).

4. Method (500) according to claim 2 or 3, wherein the pressure (pA) in the active line (14, 16) is kept (S509) at a pressure level which corresponds to a low-pressure limit (p_grenz) permissible for the refrigeration system.

5. Method (500) according to any one of the preceding claims, wherein the pressure value (p_inak) detected in the inactive line (14, 16) is compared with the static pressure (pR) resulting with applied ambient temperature or applied coolant/fluid temperature and wherein the activation of the extraction of refrigerant from the inactive line (14, 16) takes place when the detected pressure (p_inak) is greater than or equal to the static pressure (pR) resulting at ambient temperature (S504).

6. Method (500) according to any one of the preceding claims, wherein the activation of the extraction of refrigerant from the inactive line (14, 16) takes place when starting the refrigeration system or when restarting the refrigeration system in order to maximize the amount of refrigerant in the active line (14, 16).

7. Refrigeration system (10) with a heat pump function for a motor vehicle, wherein the refrigeration system (10) comprises: a primary line (14) and a secondary line (16);

a refrigerant compressor (12) which can be connected or is connected to the primary line (14) and the secondary line (16);
a directly or indirectly acting external heat exchanger (18) which is arranged in the primary line (14);
an evaporator (22) which is arranged in the primary line (14);
at least one further heat exchanger constituting a heat source, in particular a heating register (26), which is arranged in the secondary line (16);
a primary line valve (A4) which is arranged between the refrigerant compressor (12) and the external heat exchanger (18);
a secondary line valve (A3) which is arranged between the refrigerant compressor (12) and the further heat exchanger, in particular the heating register (26), which constitutes a heat source;
at least one valve apparatus (A2, A5) which is arranged between a high-pressure-side section (15, 15a) of the primary line (14) or the secondary line (16) and a low-pressure-side line section upstream of the refrigerant compressor (12),
at least one pressure sensor (pT6, pt7) or pressure/temperature sensor which is arranged in the relevant high-pressure-side line (15, 15a) of the primary line (14) or the secondary line (16), **characterized in that** the pressure sensor (pT6, pt7) or pressure/temperature sensor is configured, in an operating state with active primary line (14) and inactive secondary line (16) or with active secondary line (16) and inactive primary line (14), to detect the pressure (p_inak) in the inactive line (14, 16), and **in that** the refrigeration system (10) comprises a control apparatus which is configured to perform the method according to any one of the preceding claims.

8. Motor vehicle, in particular an at least partially electrically operated motor vehicle, with a refrigeration system (10) according to claim 7.

**Revendications**

1. Procédé (500) pour faire fonctionner une installation de réfrigération (10) pour un véhicule à moteur, dans lequel l'installation de réfrigération (10) comprend :
une branche primaire (14) et une branche secondaire (16) ;

un compresseur de réfrigérant (12) qui peut être connecté ou est connecté à la branche primaire (14) et à la branche secondaire (16) ;
un échangeur de chaleur extérieur (18) agissant directement ou indirectement qui est disposé dans la branche primaire (14) ;
un évaporateur (22) qui est disposé dans la branche primaire (14) ;
au moins un échangeur de chaleur supplémentaire constituant une source de chaleur, en particulier un registre de chauffage (26), qui est disposé dans la branche secondaire (16) ;
une vanne de branche primaire (A4) disposée entre le compresseur de réfrigérant (12) et l'échangeur de chaleur extérieur (18) ;
une vanne de branche secondaire (A3) disposée entre le compresseur de réfrigérant (12) et l'échangeur de chaleur supplémentaire, en particulier le registre de chauffage (26), qui constitue une source de chaleur ;

au moins un appareil de vanne (A2, A5) qui est disposé entre une section côté haute pression (15, 15a) de la branche primaire (14) ou de la branche secondaire (16) et une section de conduite côté basse pression située en amont du compresseur de réfrigérant (12), **caractérisé en ce que** le procédé (500) comprend les étapes suivantes :

réglage (S502) d'un mode de fonctionnement de l'installation de réfrigération avec une branche primaire active (14) et une branche secondaire inactive (16) ou avec une branche secondaire active (16) et une branche primaire inactive (14) ;

détection (S503) de la pression (p_inak) dans la branche inactive (14, 16) ;

activation d'une aspiration de réfrigérant depuis la branche inactive (14, 16) dans la branche active (14, 16) en abaissant (S506) la pression (pA) dans la branche active (14, 16) à une valeur inférieure à la pression (p_inak) dans la branche inactive (14, 16) et en ouvrant l'appareil de vanne concerné (A2, A5).

2. Procédé (500) selon la revendication 1, dans lequel la pression (pA) dans la branche active (14, 16) est abaissée (S505) en partant d'un niveau de pression de travail qui est supérieur à la pression dans la branche inactive (14, 16).

3. Procédé (500) selon la revendication 1, dans lequel la pression (pA) dans la branche active (14, 16) est abaissée (S507) davantage en partant d'un niveau de pression de travail qui est inférieur à la pression dans la branche inactive (14, 16).

4. Procédé (500) selon la revendication 2 ou 3, dans lequel la pression (pA) dans la branche active (14, 16) est maintenue (S509) à un niveau de pression qui correspond à une limite basse pression (p_grenz) admissible pour l'installation de réfrigération.

5. Procédé (500) selon l'une quelconque des revendications précédentes, dans lequel la valeur de pression (p_inak) détectée dans la branche inactive (14, 16) est comparée à la pression de repos (pR) s'établissant à la température ambiante appliquée ou à la température de réfrigérant/fluide appliquée, et dans lequel l'activation de l'aspiration de réfrigérant depuis la branche inactive (14, 16) s'effectue lorsque la pression détectée (p_inak) est supérieure ou égale à la pression de repos (pR) s'établissant à température ambiante (S504).

6. Procédé (500) selon l'une quelconque des revendications précédentes, dans lequel l'activation de l'aspiration de réfrigérant depuis la branche inactive (14, 16) s'effectue lorsque l'installation de réfrigération est démarrée ou lorsque l'installation de réfrigération est redémarrée pour maximiser la quantité de réfrigérant dans la branche active (14, 16).

7. Installation de réfrigération (10) avec fonction de pompe à chaleur pour un véhicule à moteur, dans laquelle

l'installation de réfrigération (10) comprend : une branche primaire (14) et une branche secondaire (16) ;

un compresseur de réfrigérant (12) qui peut être connecté ou est connecté à la branche primaire (14) et à la branche secondaire (16) ;

un échangeur de chaleur extérieur (18) agissant directement ou indirectement qui est disposé dans la branche primaire (14) ;

un évaporateur (22) qui est disposé dans la branche primaire (14) ;

au moins un échangeur de chaleur supplémentaire constituant une source de chaleur, en particulier un registre de chauffage (26), qui est disposé dans la branche secondaire (16) ;

une vanne de branche primaire (A4) disposée entre le compresseur de réfrigérant (12) et l'échangeur de chaleur extérieur (18) ;

une vanne de branche secondaire (A3) disposée entre le compresseur de réfrigérant (12) et l'échangeur de chaleur supplémentaire, en particulier le registre de chauffage (26), qui constitue une source de chaleur ;

au moins un appareil de vanne (A2, A5) qui est disposé entre une section côté haute pression (15, 15a) de la branche primaire (14) ou de la branche secondaire (16) et une section de conduite côté basse pression en amont du compresseur de réfrigérant (12),

au moins un capteur de pression (pT6, pt7) ou capteur de pression/température qui est disposé dans la section côté haute pression concernée (15, 15a) de la branche primaire (14) ou de la branche secondaire (16), **caractérisée en ce que** le capteur de pression (pT6, pt7) ou le capteur de pression/température est configuré pour, dans un état de fonctionnement avec branche primaire (14) active et branche secondaire (16) inactive ou avec branche secondaire (16) active et branche primaire (14) inactive, détecter la pression (p_inak) dans la branche inactive (14, 16), et **en ce que** l'installation de réfrigération (10) comprend un appareil de commande qui est configuré pour mettre en œuvre le procédé selon l'une quelconque des revendications précédentes.

8. Véhicule à moteur, en particulier véhicule à moteur au moins partiellement à commande électrique, avec une installation de réfrigération (10) selon la revendication 7.

Fig. 1

EP 4 232 761 B1

13

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011118162 A1
- DE 102019201427 A1
- DE 102013019498 A1
- DE 102018213232 A1
- DE 102018221280 A1
- EP 2921326 A2